# EUROPEAN PATENT APPLICATION

(11) **EP 4 574 397 A1**
(43) Date of publication of application: **25.06.2025**
(21) Application number: 24203808.1
(22) Date of filing: 01.10.2024
(51) Int. Cl.: B29C 49/62, B29C 49/70, B29C 49/48, B29L 31/00

(54) **BLOW MOLDING MECHANISM, INTERMEDIATE MOLD, AND MOLD UNIT**

(30) Priority: 22.12.2023 JP 2023216654
(71) Applicant: Sumitomo Heavy Industries, Ltd., Tokyo 141-6025 (JP)
(72) Inventor: SATO, Takayuki, Chiba, 263-0001, (JP); TAKAHASHI, Rei, Chiba, 263-0001, (JP)
(74) Representative: Louis Pöhlau Lohrentz

(57) **Abstract**

To prevent a final molding product that falls freely from a split mold (11, 12) that performs mold opening after blow molding is completed from coming into contact with the split mold (11, 12) that performs the mold opening. A blow molding mechanism (1) includes a first split mold (11) and a second split mold (12) that form a part of a mold used in blow molding with respect to a preform which is an intermediate molding product, perform mold closing before the blow molding starts, and perform mold opening after the blow molding is completed, a first bottom portion mold (13) that forms a part of the mold used in the blow molding, and molds at least a part of a bottom portion (203) of the preform on a side opposite to a mouth portion (201) in which an inlet (208) for high-pressure air in the blow molding is formed, and a suction unit (15) that starts suction of at least a part of the bottom portion (203) of a bottle container (200), which is a result of the blow molding, after the first split mold (11) and the second split mold (12) perform mold opening and before the bottle container (200) is separated from the first bottom portion mold (13) due to a change in a posture of the bottle container (200) of a final molding product, at the same time as the first split mold (11) and the second split mold (12) perform the mold opening, or before the first split mold (11) and the second split mold (12) perform the mold opening, after the blow molding is completed.

## Description

### BACKGROUND OF THE INVENTION

### Field of the Invention

The present invention relates to a blow molding mechanism, an intermediate mold, and a mold unit.

### Description of Related Art

In injection blow forming, which is a molding method in which injection molding and blow forming (blow molding) are performed in two stages, a preform, which is an intermediate molding product, is molded via injection molding, and a product such as a container is molded by blowing air into the inside of the preform and extruding the preform via blow molding. In the blow molding, a split mold that can be separated into a plurality of molds is used (for example, Japanese Patent No. 4425750).

### SUMMARY OF THE INVENTION

When the blow molding is completed, the split mold performs mold opening, and a final molding product is removed. As a method of removing the final molding product from the split mold that performs the mold opening, there is a method of allowing the final molding product to fall freely. However, when the split mold performs the mold opening, the posture of the final molding product may be unstable, and the final molding product may come into contact with the split mold and be scratched in the middle of free falling.

An object of the present invention is to prevent a final molding product that falls freely from a split mold that performs mold opening after blow molding is completed from coming into contact with the split mold that performs the mold opening.

According to an aspect of the present invention completed based on the above object, there is provided a blow molding mechanism including a split mold that forms a part of a mold used in blow molding with respect to an intermediate molding product, performs mold closing before the blow molding starts, and performs mold opening after the blow molding is completed, a first bottom portion mold that forms a part of the mold, and molds at least a part of a bottom portion of the intermediate molding product on a side opposite to a mouth portion in which an inlet for a fluid in the blow molding is formed, and suction means that starts suction of at least a part of the bottom portion of a final molding product, which is a result of the blow molding, after the split mold performs the mold opening and before the final molding product is separated from the first bottom portion mold due to a change in a posture of the final molding product, at the same time as the split mold performs the mold opening, or before the split mold performs the mold opening, after the blow molding is completed.

Here, a second bottom portion mold that is disposed in a portion penetrating a part of the first bottom portion mold in an axial direction of the intermediate molding product, and that molds at least a part of the bottom portion may be further provided.

In addition, the suction means may suck at least a part of the bottom portion through a gap between the second bottom portion mold and the first bottom portion mold, which is formed around the second bottom portion mold.

In addition, the split mold may include a first split mold that molds the mouth portion, and a second split mold that molds a main body which is a portion other than the mouth portion and the bottom portion, and the suction means may start the suction after the first split mold and the second split mold perform mold opening and before the final molding product, which is the result of the blow molding, is separated from the first bottom portion mold due to the change in the posture of the final molding product, at the same time as the first split mold and the second split mold perform the mold opening, or before the first split mold and the second split mold perform the mold opening, after the blow molding is completed.

In addition, according to another aspect of the present invention, there is provided an intermediate mold including a blow molding mechanism that performs blow molding with respect to an intermediate molding product, in which the blow molding mechanism includes a split mold that forms a part of a mold used in the blow molding with respect to the intermediate molding product, performs mold closing before the blow molding starts, and performs mold opening after the blow molding is completed, a first bottom portion mold that forms a part of the mold, and molds at least a part of a bottom portion of the intermediate molding product on a side opposite to a mouth portion in which an inlet for a fluid in the blow molding is formed, and suction means that starts suction of at least a part of the bottom portion of a final molding product, which is a result of the blow molding, after the split mold performs the mold opening and before the final molding product is separated from the first bottom portion mold due to a change in a posture of the final molding product, at the same time as the split mold performs the mold opening, or before the split mold performs the mold opening, after the blow molding is completed.

In addition, according to another aspect of the present invention, there is provided a mold unit including a stationary mold, an intermediate mold that includes a blow molding mechanism performing blow molding with respect to an intermediate molding product, and a movable mold, in which the blow molding mechanism of the intermediate mold includes a split mold that forms a part of a mold used in the blow molding with respect to the intermediate molding product, performs mold closing before the blow molding starts, and performs mold opening after the blow molding is completed, a first bottom portion mold that forms a part of the mold, and molds at least a part of a bottom portion of the intermediate molding product on a side opposite to a mouth portion in which an inlet for a fluid in the blow molding is formed, and suction means that starts suction of at least a part of the bottom portion of a final molding product, which is a result of the blow molding, after the split mold performs the mold opening and before the final molding product is separated from the first bottom portion mold due to a change in a posture of the final molding product, at the same time as the split mold performs the mold opening, or before the split mold performs the mold opening, after the blow molding is completed.

According to the present invention, it is possible to prevent the final molding product that falls freely from the split mold that performs the mold opening after the blow molding is completed from coming into contact with the split mold that performs the mold opening.

### BRIEF DESCRIPTION OF THE DRAWINGS

Fig. 1 is a sectional view illustrating an example of a configuration of a blow molding mechanism according to the present embodiment.
Fig. 2 is a flowchart illustrating a flow of an operation in an intermediate mold to which the blow molding mechanism is applied.
Figs. 3A and 3B are diagrams illustrating a flow of an operation of the blow molding mechanism after blow molding is completed.
Fig. 4 is a diagram illustrating an example of a case where a suction unit does not start suction when a first split mold and a second split mold start mold opening.

### DETAILED DESCRIPTION OF THE INVENTION

Hereinafter, an embodiment of the present invention will be described in detail with reference to the accompanying drawings.

### <Configuration of Blow Molding Mechanism>

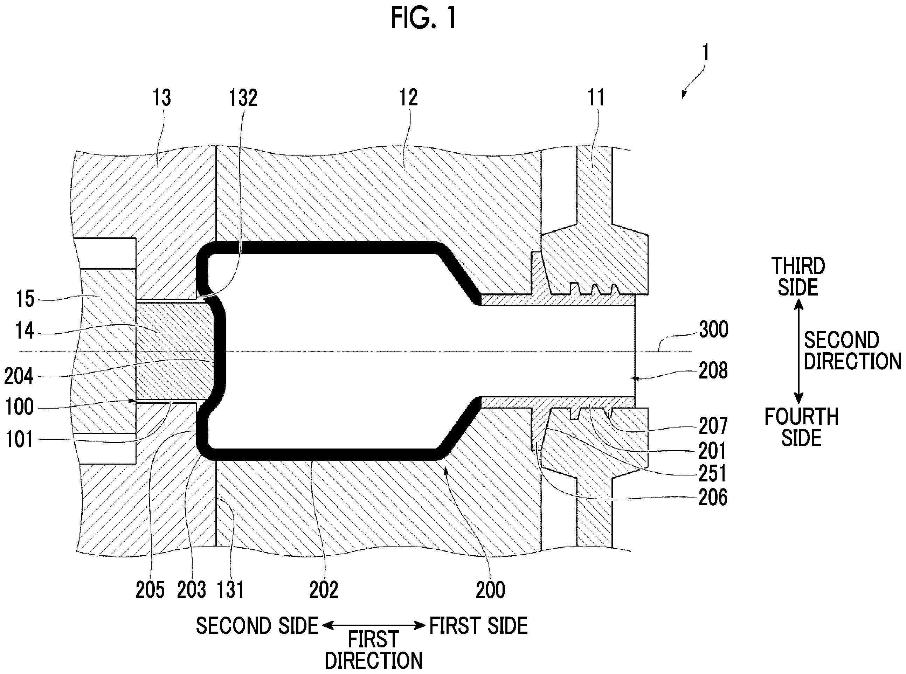

Fig. 1 is a sectional view illustrating an example of a configuration of a blow molding mechanism 1 according to the present embodiment. Fig. 1 illustrates a state where the blow molding mechanism 1 is viewed from the top side toward the bottom side in an top-bottom direction. Therefore, the front side of the drawing of Fig. 1 is the top side in the top-bottom direction, and the rear side of the drawing is the bottom side in the top-bottom direction.

The blow molding mechanism 1 illustrated in Fig. 1 is a mechanism applied to an intermediate mold included in a mold unit that performs injection blow forming. The intermediate mold to which the blow molding mechanism 1 is applied is a so-called rotating mold that is disposed between a stationary mold and a movable mold (not illustrated). The injection blow forming refers to a molding method in which injection molding (hereinafter, referred to as "injection molding") and blow forming (hereinafter, referred to as "blow molding") are performed in two stages. The injection molding is performed in a state where the stationary mold and the intermediate mold are subjected to mold closing. In addition, the blow molding is performed in a state where the movable mold and the intermediate mold are subjected to the mold closing.

In the injection blow forming, first, a preform (not illustrated) which is an intermediate molding product is molded in the injection molding which is a first stage molding. Next, in the blow molding which is a second stage molding, a final molding product is molded by blowing the high-pressure air into the inside of the preform and extruding the preform. Examples of the method of blowing air into the inside of the preform via the blow molding include a method of protruding an extrusion rod (not illustrated) that can output the high-pressure air into the preform.

Fig. 1 illustrates a bottle container 200 having a substantially cylindrical shape as the final molding product, subjected to blow molding in a mold in a state of being subjected to mold closing. The axial direction of the bottle container 200 in a state of being subjected to mold closing is the right-left direction of the drawing, and is the same direction as the direction where the intermediate mold to which the blow molding mechanism 1 is applied and the movable mold are opened and closed. Hereinafter, a direction where the intermediate mold to which the blow molding mechanism 1 is applied and the movable mold are opened and closed (a right-left direction of the drawing of Fig. 1) will be referred to as the "first direction". Furthermore, the right side of the drawing in the first direction is referred to as the "first side", and the left side of the drawing in the first direction is referred to as the "second side". In addition, a direction perpendicular to the first direction (a vertical direction of the drawing in Fig. 1) is referred to as the "second direction". Furthermore, the upper side of the drawing in the second direction is referred to as the "third side", and the lower side of the drawing in the second direction is referred to as the "fourth side".

The filled portion of the cross section of the bottle container 200 indicates a portion where the preform is extruded via the blow molding. However, in reality, a portion that is extruded via the blow molding and a portion that is not extruded are not clearly distinguished from each other. Therefore, a boundary portion between the filled portion and the hatched portion in the cross section of the bottle container 200 in Fig. 1 merely indicates an approximate position.

The bottle container 200 includes a mouth portion 201, a main body 202, and a bottom portion 203. The mouth portion 201, the main body 202, and the bottom portion 203 are portions of the shape of the bottle container 200 having continuity, and there is no clear boundary. Therefore, in the present embodiment, the mouth portion 201 is a portion that is gripped by a first split mold 11 (described later) and is subjected to injection molding. Specifically, the mouth portion 201 is a portion including the vicinity of the end portion of the first side of the bottle container 200 in the first direction, that is, a surface 251 of a flange 206 on the first side in the first direction and a male screw 207 screwed into a female screw of a cap (not illustrated) of the bottle container 200.

In addition, the bottom portion 203 is a portion molded by a first bottom portion mold 13 and a second bottom portion mold 14 (described later). Specifically, the bottom portion 203 is a portion in the vicinity of the end portion of the bottle container 200 on the second side in the first direction. In addition, the main body 202 is a portion molded by a second split mold 12 (described later). Specifically, the main body 202 is a portion other than the mouth portion 201 and the bottom portion 203 of the bottle container 200.

The blow molding mechanism 1 includes the first split mold 11, the second split mold 12, the first bottom portion mold 13, and the second bottom portion mold 14, which are the molds. In addition, the blow molding mechanism 1 includes a suction unit 15 that sucks the bottle container 200. The first split mold 11 is a split mold that can perform mold opening and mold closing in the second direction, and functions as a mold for the injection molding and the blow molding. The first split mold 11 molds the mouth portion 201 in a state of mold closing during the injection molding, and grips the mouth portion 201 in a state of mold closing during the blow molding. In addition, the first split mold 11 releases the mouth portion 201 by performing the mold opening after the blow molding is completed. The first split mold 11 is also called a split mold or a mouth split mold.

The second split mold 12 is a split mold that can perform mold opening and mold closing in the second direction, and functions as a mold for the blow molding. The second split mold 12 molds the main body 202 in a state of mold closing during the blow molding. In addition, the second split mold 12 releases the main body 202 by performing the mold opening after the blow molding is completed. The second split mold 12 is also called a blow mold.

The first bottom portion mold 13 functions as a mold for the blow molding. The first bottom portion mold 13 molds at least a part of the bottom portion 203 during the blow molding. The first bottom portion mold 13 is provided with a through-hole 100 penetrating in the first direction. The through-hole 100 is disposed on an extension line of a center line 300 of the bottle container 200 in a state where the first split mold 11 and the second split mold 12 are subjected to mold closing, and forms a space in which a second bottom portion mold 14 described later can be disposed. The diameter of the through-hole 100 is slightly larger than the outer diameter of the second bottom portion mold 14 (described later). Therefore, a gap 101 is formed between the first bottom portion mold 13 and the second bottom portion mold 14 in a state where the second bottom portion mold 14 is disposed in the through-hole 100.

In Fig. 1, although each of the boundary portion between the first split mold 11 and the second split mold 12 and the boundary portion between the second split mold 12 and the first bottom portion mold 13 is illustrated as being in contact with each other, in reality, a slight gap that causes the facing surfaces to slide is formed. That is, the slight gap that causes the facing surfaces to slide is formed in each of the boundary portion between the first split mold 11 and the second split mold 12 and the boundary portion between the second split mold 12 and the first bottom portion mold 13. Therefore, the first split mold 11 is slidable with respect to the second split mold 12 in the second direction, and the second split mold 12 is slidable with respect to the first split mold 11 in the second direction. In addition, the second split mold 12 is slidable with respect to the first bottom portion mold 13 in the second direction.

The second bottom portion mold 14 is a columnar metal member disposed to slightly protrude from the through-hole 100 to the first side in the first direction, and functions as a mold for the blow molding. For example, the second bottom portion mold 14 may be a part of a protrusion unit (ejector) having a function of causing a molding product to protrude and separating the molding product from the mold. A tubular notch portion 132 is formed on a surface 131 on the first side of the first bottom portion mold 13 described above in the first direction to surround the through-hole 100. Therefore, the second bottom portion mold 14 and the notch portion 132 mold a recessed portion 204 and a protrusion 205 in the bottom portion 203 of the bottle container 200.

The suction unit 15 includes a vacuum pump or the like, and sucks at least a part of the bottom portion 203 of the bottle container 200. Specifically, the suction unit 15 sucks at least a part of the bottom portion 203 via the gap 101 that is formed between the first bottom portion mold 13 and the second bottom portion mold 14 and that serves as a passage for air during suction.

### <Flow of Operation after Blow Molding Is Completed>

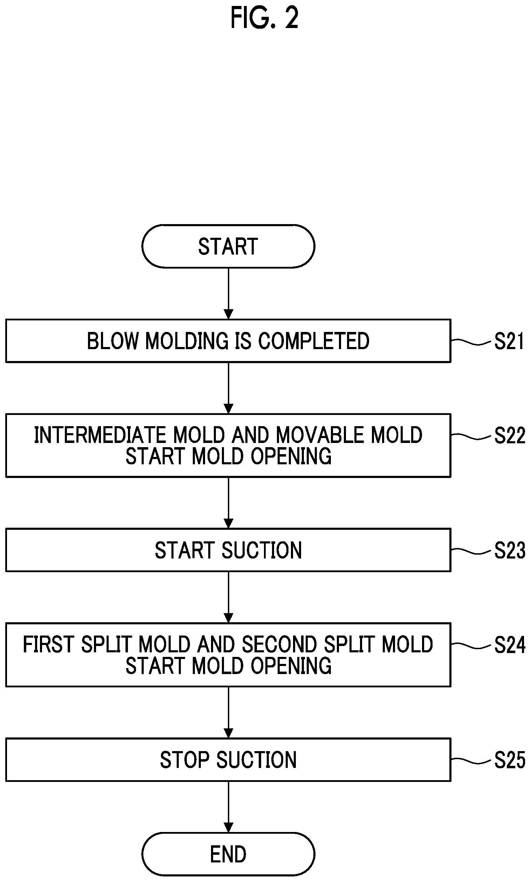

Fig. 2 is a flowchart illustrating a flow of an operation in the intermediate mold to which the blow molding mechanism 1 is applied.

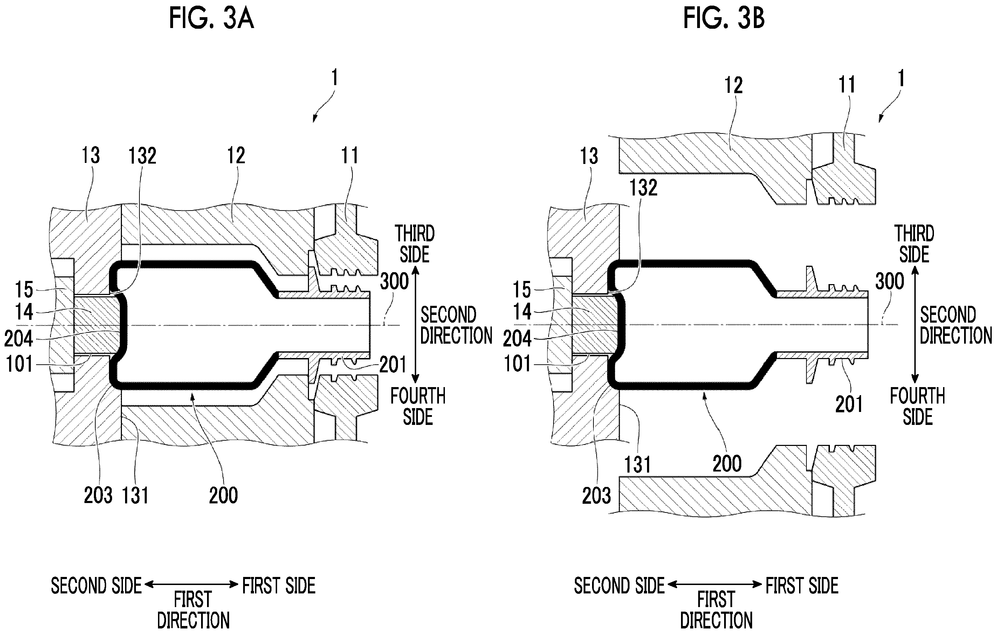

Figs. 3A and 3B are diagrams illustrating a flow of an operation of the blow molding mechanism 1 after the blow molding is completed.

When the blow molding via the blow molding mechanism 1 is completed and the bottle container 200 is molded (step S21), the intermediate mold subjected to mold closing and the movable mold start the mold opening (step S22). As a result, the suction unit 15 of the blow molding mechanism 1 starts suction of at least a part of the bottom portion 203 of the bottle container 200 (step S23). The posture of the bottle container 200 at this time is a state illustrated in Fig. 1 described above, that is, a state where the center line 300 of the bottle container 200 is not changed.

When the suction unit 15 starts the suction, the first split mold 11 and the second split mold 12 start the mold opening (step S24). Fig. 3A illustrates a state immediately after the first split mold 11 and the second split mold 12 start the mold opening. The first split mold 11 and the second split mold 12 may start the mold opening at the same time, or the first split mold 11 may start the mold opening immediately after the second split mold 12 starts the mold opening.

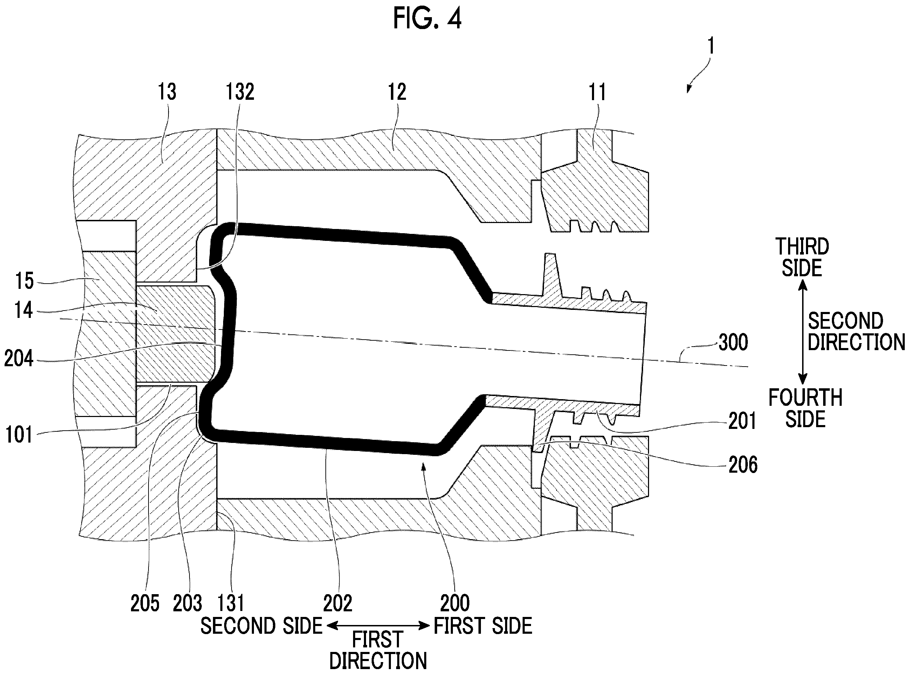

The suction unit 15 continues to suck the bottom portion 203 of the bottle container 200 when the first split mold 11 and the second split mold 12 start the mold opening. Therefore, even immediately after the first split mold 11 and the second split mold 12 start the mold opening, the posture of the bottle container 200 is not disturbed, and the same state as the state illustrated in Fig. 1 described above, that is, the state where the center line 300 of the bottle container 200 is not changed, is maintained. An example of a case where the suction unit 15 does not perform suction when the first split mold 11 and the second split mold 12 start the mold opening will be described later with reference to Fig. 4.

The suction force of the suction unit 15 may be a suction force capable of maintaining the posture of the bottle container 200 when the first split mold 11 and the second split mold 12 start the mold opening, and a suction force sufficient to support its own weight of the bottle container 200 is not required. Therefore, after the first split mold 11 and the second split mold 12 start the mold opening, the bottle container 200 starts free falling due to its own weight even in a state where the suction unit 15 continues suction. Specifically, the bottle container 200 starts free falling toward the rear side of the drawing of Fig. 3B. The suction unit 15 stops suction during the period from when the first split mold 11 and the second split mold 12 start the mold opening to when the mold opening is completed (step S25).

### <Comparative Example>

Fig. 4 is a diagram illustrating an example of a case where the suction unit 15 does not start the suction when the first split mold 11 and the second split mold 12 start the mold opening.

As described with reference to Figs. 1 to 3A and 3B, in the blow molding mechanism 1 according to the present embodiment, when the blow molding is completed and the intermediate mold and the movable mold start the mold opening, the suction unit 15 starts suction of at least a part of the bottom portion 203 of the bottle container 200. When the first split mold 11 and the second split mold 12 start the mold opening, the bottle container 200 starts free falling due to its own weight. The suction unit 15 continues suction when the first split mold 11 and the second split mold 12 start the mold opening. Accordingly, the posture of the bottle container 200 other than the top-bottom direction (gravity direction) is maintained before the mold opening of the first split mold 11 and the second split mold 12 starts and immediately after the mold opening starts. As a result, the bottle container 200 starts free falling in a stable state where the center line 300 is suppressed from being inclined on the third side or the fourth side in the second direction.

On the other hand, in a case where the suction unit 15 does not perform suction the bottom portion 203 of the bottle container 200 when the first split mold 11 and the second split mold 12 start the mold opening, the posture of the bottle container 200 is not maintained before the mold opening of the first split mold 11 and the second split mold 12 starts and immediately after the mold opening starts. For example, as illustrated in the example of Fig. 4, the mouth portion 201 of the bottle container 200 may be inclined to the fourth side in the second direction, or although not illustrated, the mouth portion 201 of the bottle container 200 may be inclined to the third side in the second direction. In this case, since the bottle container 200 is not only unable to maintain the posture in the top-bottom direction (gravity direction) but also unable to maintain the posture in other directions, the bottle container 200 starts free falling in an unstable state where the center line 300 is inclined on the third side or the fourth side in the second direction. As a result, there is a possibility that the bottle container 200 comes into contact with the first split mold 11 or the second split mold 12 and is scratched when falling.

Here, the reason why the posture of the bottle container 200 is not maintained before the mold opening of the first split mold 11 and the second split mold 12 starts and immediately after the mold opening starts will be described with reference to Figs. 3A and 4 described above. When the first split mold 11 and the second split mold 12 start the mold opening, a force (hereinafter, referred to as the "mold release force") for pulling the bottle container 200 is applied to the first split mold 11 and the second split mold 12. As a result, the bottle container 200 may be affected by the mold release force and may be disturbed in posture. In addition, the bottle container 200 may be slightly caught on the first split mold 11 or the second split mold 12 and may disturb the posture when the first split mold 11 and the second split mold 12 perform the mold opening. Furthermore, the posture of the bottle container 200 may be disturbed by a slight vibration generated in an operation in which the first split mold 11 and the second split mold 12 perform the mold opening.

On the other hand, as in the present embodiment, when the suction unit 15 continues suction when the mold opening via the first split mold 11 and the second split mold 12 starts, the posture of the bottle container 200 is maintained before the mold opening starts and immediately after the mold opening starts. That is, the suction force of the suction unit 15 cannot prevent the bottle container 200 from being disturbed in the posture in the top-bottom direction when falling freely, but can prevent the bottle container 200 from being affected by the mold release force and being disturbed in the posture in any direction other than the top-bottom direction. Furthermore, the suction force of the suction unit 15 can prevent the posture in the second direction from being disturbed by being slightly caught on the first split mold 11 and the second split mold 12 when the first split mold 11 and the second split mold 12 perform the mold opening, or the posture from being disturbed by a slight vibration generated in an operation in which the first split mold 11 and the second split mold 12 perform the mold opening. As a result, the bottle container 200 starts free falling in a stable state where the center line 300 is suppressed from being inclined on the third side or the fourth side in the second direction.

In summary, the blow molding mechanism and the intermediate mold to which the present invention is applied may only need to have the following configuration and can take various embodiments.

That is, the blow molding mechanism 1 according to the present embodiment is the blow molding mechanism including the split mold (for example, the first split mold 11 and the second split mold 12) that forms a part of the mold used in the blow molding with respect to the preform which is the intermediate molding product, performs the mold closing before the blow molding starts, and performs the mold opening after the blow molding is completed, the first bottom portion mold 13 that forms a part of the mold used in the blow molding, and molds at least a part of the bottom portion 203 of the preform on a side opposite to the mouth portion 201 in which the inlet 208 for the fluid (for example, high-pressure air) in the blow molding is formed, and the suction unit 15 that starts the suction of at least a part of the bottom portion 203 of the bottle container 200 after the split mold performs the mold opening and before the bottle container 200 is separated from the first bottom portion mold 13 due to a change in a posture of the bottle container 200 of the final molding product, which is a result of the blow molding, at the same time as the split mold performs the mold opening, or before the split mold performs the mold opening, after the blow molding is completed.

In this manner, in the blow molding mechanism 1, when the blow molding is completed and the intermediate mold and the movable mold start the mold opening, the suction unit 15 starts the suction of at least a part of the bottom portion 203 of the bottle container 200. When the split mold starts the mold opening, the bottle container 200 starts free falling due to its own weight. Here, the suction unit 15 continues suction when the split mold starts the mold opening. Therefore, the posture of the bottle container 200 is maintained before the mold opening of the split mold starts and immediately after the mold opening starts. As a result, since the bottle container 200 starts free falling in a stable state where the center line 300 is suppressed from being inclined on the third side or the fourth side in the second direction, the bottle container 200 is prevented from coming into contact with the split mold and being scratched when the bottle container 200 falls.

Here, a second bottom portion mold 14 that is disposed in a portion penetrating a part of the first bottom portion mold 13, and that molds at least a part of the bottom portion 203 may be further provided.

In this manner, since the second bottom portion mold 14 molds at least a part of the bottom portion 203 of the bottle container 200, the bottom portion 203 can be molded by the combination of the first bottom portion mold 13 and the second bottom portion mold 14. Furthermore, a gap 101 for the suction unit 15 to suck at least a part of the bottom portion 203 of the bottle container 200 is formed between the first bottom portion mold 13 and the second bottom portion mold 14.

In addition, the suction unit 15 may suck at least a part of the bottom portion 203 of the bottle container 200 through the gap 101 between the second bottom portion mold 14 and the first bottom portion mold 13, which is formed around the second bottom portion mold 14.

In this manner, at least a part of the bottom portion 203 of the bottle container 200 is sucked through the gap 101 between the second bottom portion mold 14 and the first bottom portion mold 13, which is formed around the second bottom portion mold 14. As a result, the posture of the bottle container 200 can be maintained.

In addition, the split mold may include the first split mold 11 that molds the mouth portion 201 of the bottle container 200 and the second split mold 12 that molds the main body 202 other than the mouth portion 201 and the bottom portion 203, and the suction unit 15 may start the suction of at least a part of the bottom portion 203 of the bottle container 200 after the first split mold 11 and the second split mold 12 perform the mold opening and before the bottle container 200 is separated from the first bottom portion mold 13 due to the change in the posture of the bottle container 200 of the final molding product, which is the result of the blow molding, at the same time as the first split mold 11 and the second split mold 12 perform the mold opening, or before each of the first split mold 11 and the second split mold 12 performs the mold opening, after the blow molding is completed.

In this manner, in the blow molding mechanism 1, when the blow molding is completed and the intermediate mold and the movable mold start the mold opening, the suction unit 15 starts the suction of at least a part of the bottom portion 203 of the bottle container 200. When the first split mold 11 and the second split mold 12 start the mold opening, the bottle container 200 starts free falling due to its own weight. Here, the suction unit 15 continues suction when the first split mold 11 and the second split mold 12 start the mold opening. Therefore, the posture of the bottle container 200 is maintained before the mold opening of the first split mold 11 and the second split mold 12 starts and immediately after the mold opening starts. As a result, since the bottle container 200 starts free falling in a stable state where the center line 300 is suppressed from being inclined on the third side or the fourth side in the second direction, the bottle container 200 is prevented from coming into contact with the split mold and being scratched when the bottle container 200 falls.

In addition, the intermediate mold to which the present invention is applied may only need to have the following configuration and can take various embodiments.

That is, the intermediate mold according to the present embodiment is the intermediate mold including the blow molding mechanism 1 that performs the blow molding with respect to the preform which is the intermediate molding product, in which the blow molding mechanism 1 includes the first split mold 11 and the second split mold 12 that form a part of the mold used in the blow molding with respect to the preform, which is the intermediate molding product, perform the mold closing before the blow molding starts, and perform the mold opening after the blow molding is completed, the first bottom portion mold 13 that forms a part of the mold used in the blow molding, and molds at least a part of the bottom portion 203 of the preform on the side opposite to the mouth portion 201 in which the inlet 208 for the fluid in the blow molding is formed, and the suction unit 15 that starts the suction of at least a part of the bottom portion 203 of the bottle container 200 after the first split mold 11 and the second split mold 12 perform the mold opening and before the bottle container 200 of the final molding product, which is a result of the blow molding, is separated from the first bottom portion mold 13 due to the change in the posture of the bottle container 200, at the same time as the first split mold 11 and the second split mold 12 perform the mold opening, or before the first split mold 11 and the second split mold 12 perform the mold opening, after the blow molding is completed.

In this manner, in the blow molding mechanism 1 of the intermediate mold, when the blow molding is completed and the intermediate mold and the movable mold start the mold opening, the suction unit 15 starts the suction of at least a part of the bottom portion 203 of the bottle container 200. When the first split mold 11 and the second split mold 12 start the mold opening, the bottle container 200 starts free falling due to its own weight. Here, the suction unit 15 continues suction when the first split mold 11 and the second split mold 12 start the mold opening. Therefore, the posture of the bottle container 200 is maintained before the mold opening of the first split mold 11 and the second split mold 12 starts and immediately after the mold opening starts. As a result, since the bottle container 200 starts free falling in a stable state where the center line 300 is suppressed from being inclined on the third side or the fourth side in the second direction, the bottle container 200 is prevented from coming into contact with the split mold and being scratched when the bottle container 200 falls.

In addition, the mold unit to which the present invention is applied may only need to have the following configuration and can take various embodiments.

That is, the mold unit according to the present embodiment is the mold unit including the stationary mold, the intermediate mold that includes the blow molding mechanism 1 performing the blow molding with respect to the intermediate molding product, and the movable mold, in which the blow molding mechanism 1 of the intermediate mold includes the first split mold 11 and the second split mold 12 that form a part of the mold used in the blow molding with respect to the preform, which is the intermediate molding product, perform the mold closing before the blow molding starts, and perform the mold opening after the blow molding is completed, the first bottom portion mold 13 that forms a part of the mold used in the blow molding, and molds at least a part of the bottom portion 203 of the preform on the side opposite to the mouth portion 201 in which the inlet 208 for the fluid in the blow molding is formed, and the suction unit 15 that starts the suction of at least a part of the bottom portion 203 of the bottle container 200 after the first split mold 11 and the second split mold 12 perform the mold opening and before the bottle container 200 of the final molding product, which is a result of the blow molding, is separated from the first bottom portion mold 13 due to the change in the posture of the bottle container 200, at the same time as the first split mold 11 and the second split mold 12 perform the mold opening, or before the first split mold 11 and the second split mold 12 perform the mold opening, after the blow molding is completed.

In this manner, in the blow molding mechanism 1 of the intermediate mold, when the blow molding is completed and the intermediate mold and the movable mold start the mold opening, the suction unit 15 starts the suction of at least a part of the bottom portion 203 of the bottle container 200. When the first split mold 11 and the second split mold 12 start the mold opening, the bottle container 200 starts free falling due to its own weight. Here, the suction unit 15 continues suction when the first split mold 11 and the second split mold 12 start the mold opening. Therefore, the posture of the bottle container 200 is maintained before the mold opening of the first split mold 11 and the second split mold 12 starts and immediately after the mold opening starts. As a result, since the bottle container 200 starts free falling in a stable state where the center line 300 is suppressed from being inclined on the third side or the fourth side in the second direction, the bottle container 200 is prevented from coming into contact with the split mold and being scratched when the bottle container 200 falls.

### <Others>

Hereinbefore, although the embodiment of the present invention is described, the present invention is not limited to the above-described embodiment. In addition, the effects of the present invention are not limited to those described in the above-described embodiments. For example, the configurations of the blow molding mechanism 1 illustrated in Fig. 1 are merely examples for achieving the object of the present invention and are not particularly limited.

In addition, the order of the steps of the operation illustrated in Fig. 2 is also merely an example and is not particularly limited. The process is not only performed in time series in accordance with the order of the steps illustrated in Fig. 2, but need not necessarily be performed in time series, and may be performed in parallel or individually. For example, in Fig. 2, it is illustrated that the intermediate mold and the movable mold start the mold opening in step S22, and the suction unit 15 of the blow molding mechanism 1 starts the suction in step S23. However, step S22 and step S23 may be in reverse order. That is, the suction unit 15 of the blow molding mechanism 1 may start the suction before the intermediate mold and the movable mold start the mold opening, and more specifically, the suction unit 15 of the blow molding mechanism 1 may start the suction before step S24 in which the first split mold 11 and the second split mold 12 start the mold opening.

In addition, the operation of the bottle container 200 when the first split mold 11 and the second split mold 12 start the mold opening is different depending on the suction force of the suction unit 15, the shape of the first bottom portion mold 13 and the second bottom portion mold 14, or the like. For example, the posture of the bottle container 200 can be easily maintained by increasing the suction force of the suction unit 15. In addition, the timing at which the bottle container 200 starts free falling can be slightly delayed. In addition, the suction force can be increased by changing the shape of the first bottom portion mold 13 or the second bottom portion mold 14 so that the diameter of the gap 101 increases. Also in this case, the posture of the bottle container 200 can be easily maintained, and the timing at which the bottle container 200 starts free falling can be slightly delayed.

In addition, in the above-described embodiment, the speed of the operation in which the first split mold 11 and the second split mold 12 perform the mold opening is not particularly limited. However, the influence of the mold release force can be suppressed by slowing down the operation in which the first split mold 11 and the second split mold 12 perform the mold opening. In addition, the influence of the mold release force can also be suppressed by causing the speed of the operation in which the first split mold 11 and the second split mold 12 perform the mold opening to be switched from a slow speed to a fast speed in a stepwise (or gradually) manner. In these cases, the bottle container 200 can be prevented from being affected by the mold release force and being disturbed in posture. However, since the operation in which the first split mold 11 and the second split mold 12 perform the mold opening is delayed, the work efficiency as a whole is reduced.

In addition, in the above-described embodiment, although the final molding product is the bottle container 200, the final molding product need not be the bottle container. The final molding product may be any molding product molded via the injection blow forming.

In addition, the blow molding mechanism 1 according to the above-described embodiment is premised on being applied to a device that performs injection blow forming, which is a molding method of performing the injection molding and the blow forming (blow molding) in two stages, but can also be applied to a device that performs only the blow molding.

In the above-described embodiment, the suction unit 15 starts the suction before the first split mold 11 and the second split mold 12 perform the mold opening, but the present invention is not limited thereto. Since it is sufficient that the posture of the bottle container 200 can be maintained by using any method when the first split mold 11 and the second split mold 12 perform the mold opening, the suction unit 15 may start the suction after the first split mold 11 and the second split mold 12 perform the mold opening. In this case, examples of the method of maintaining the posture of the bottle container 200 include a method in which another suction unit (not illustrated) other than the suction unit 15 sucks a part of the bottle container 200, and a method in which the first split mold 11, the second split mold 12, or other members maintain the posture of the bottle container 200.

### Brief Description of the Reference Symbols

1 blow molding mechanism
11 first split mold
12 second split mold
13 first bottom portion mold
14 second bottom portion mold
15 suction unit
100 through-hole
101 gap
200 bottle container
201 mouth portion
202 main body
203 bottom portion
204 recessed portion
205 protrusion

## Claims

1. A blow molding mechanism (1) comprising:
a split mold (11, 12) that forms a part of a mold used in blow molding with respect to an intermediate molding product, performs mold closing before the blow molding starts, and performs mold opening after the blow molding is completed;
a first bottom portion mold (13) that forms a part of the mold, and molds at least a part of a bottom portion (203) of the intermediate molding product on a side opposite to a mouth portion (201) in which an inlet (208) for a fluid in the blow molding is formed; and
suction means (15) that starts suction of at least a part of the bottom portion (203) of a final molding product, which is a result of the blow molding, after the split mold (11, 12) performs the mold opening and before the final molding product is separated from the first bottom portion mold (13) due to a change in a posture of the final molding product, at the same time as the split mold (11, 12) performs the mold opening, or before the split mold (11, 12) performs the mold opening, after the blow molding is completed.

2. The blow molding mechanism (1) according to claim 1, further comprising:
a second bottom portion mold (14) that is disposed in a portion penetrating a part of the first bottom portion mold (13) in an axial direction of the intermediate molding product, and that molds at least a part of the bottom portion (203).

3. The blow molding mechanism (1) according to claim 2, wherein
the suction means (15) sucks at least a part of the bottom portion (203) through a gap (101) between the second bottom portion mold (14) and the first bottom portion mold (13), which is formed around the second bottom portion mold (14) .

4. The blow molding mechanism (1) according to claim 1, wherein
the split mold (11, 12) includes a first split mold (11) that molds the mouth portion (201), and a second split mold (12) that molds a main body (202) which is a portion other than the mouth portion (201) and the bottom portion (203), and
the suction means (15) starts the suction after the first split mold (11) and the second split mold (12) perform mold opening and before the final molding product, which is the result of the blow molding, is separated from the first bottom portion mold (13) due to the change in the posture of the final molding product, at the same time as the first split mold (11) and the second split mold (12) perform the mold opening, or before the first split mold (11) and the second split mold (12) perform the mold opening, after the blow molding is completed.

5. An intermediate mold comprising:
a blow molding mechanism (1) that performs blow molding with respect to an intermediate molding product, wherein
the blow molding mechanism (1) includes
a split mold (11, 12) that forms a part of a mold used in the blow molding with respect to the intermediate molding product, performs mold closing before the blow molding starts, and performs mold opening after the blow molding is completed,
a first bottom portion mold (13) that forms a part of the mold, and molds at least a part of a bottom portion (203) of the intermediate molding product on a side opposite to a mouth portion (201) in which an inlet (208) for a fluid in the blow molding is formed, and
suction means (15) that starts suction of at least a part of the bottom portion (203) of a final molding product, which is a result of the blow molding, after the split mold (11, 12) performs the mold opening and before the final molding product is separated from the first bottom portion mold (13) due to a change in a posture of the final molding product, at the same time as the split mold (11, 12) performs the mold opening, or before the split mold (11, 12) performs the mold opening, after the blow molding is completed.

6. A mold unit comprising:
a stationary mold;
an intermediate mold that includes a blow molding mechanism (1) performing blow molding with respect to an intermediate molding product; and
a movable mold, wherein
the blow molding mechanism (1) of the intermediate mold includes
a split mold (11, 12) that forms a part of a mold used in the blow molding with respect to the intermediate molding product, performs mold closing before the blow molding starts, and performs mold opening after the blow molding is completed,
a first bottom portion mold (13) that forms a part of the mold, and molds at least a part of a bottom portion (203) of the intermediate molding product on a side opposite to a mouth portion (201) in which an inlet (208) for a fluid in the blow molding is formed, and
suction means (15) that starts suction of at least a part of the bottom portion (203) of a final molding product, which is a result of the blow molding, after the split mold (11, 12) performs the mold opening and before the final molding product is separated from the first bottom portion mold (13) due to a change in a posture of the final molding product, at the same time as the split mold (11, 12) performs the mold opening, or before the split mold (11, 12) performs the mold opening, after the blow molding is completed.
